# EUROPEAN PATENT SPECIFICATION

(11) **EP 1 385 365 B1**
(45) Date of publication and mention of the grant of the patent: **12.12.2007**
(21) Application number: 02712991.5
(22) Date of filing: 05.04.2002
(51) Int. Cl.: A01D 7/00

(54) **A RAKE**
RECHEN
RATEAU

(30) Priority: 06.04.2001 FI 20010148 U; 28.03.2002 FI 20020600
(43) Date of publication of application: 04.02.2004
(73) Proprietor: Serlachius, Jarl Fredrik, 02130 Espoo (FI)
(72) Inventor: Serlachius, Jarl Fredrik, 02130 Espoo (FI)
(86) International application number: PCT/FI2002/000290
(87) International publication number: WO 2002/080654

(56) References cited:
- DE-A- 2 453 002
- FI-B- 79 925
- US-A- 1 239 687
- US-A- 2 475 862
- US-A- 3 724 188

## Description

The invention comprises a rake, which is a combination of the leaf rake and the garden rake, according to the preamble of claim one.

A similar rake is already known by FI-B-79925.

The rake is man's ancient tool for maintaining clean surroundings; it has stayed almost unchanged until today. After the invention of plastic materials, and, as, in the recent years, especially the properties of plastics improved, the rake has become one of the favorite objects in industrial design. The rakes designed by Fiskars Oy stand a good example of today's rake. The rakes are of bright color and their form is smooth. But, these changes mainly represent the form. Functionally, the rake has not changed much in the course of years. True, after the introduction of plastics, the rake has become lighter and easier to use, but, in other respects, grandpa's wooden rake had prongs similar to today's rake.

There are two types of rakes for regular home use: the garden rake as well as the leaf rake. The garden rake's construction is thoroughly rigid. Its prongs are not flexible in respect to their connecting part. Below, when mentioning garden rake prongs, the reference is to the aforementioned rigid prongs. The garden rake is intended for moving a heavier load, but it is also used for raking lighter material, such as tree leaves. When raking with the garden rake, long, easy pulling motion is applied; but it is also used for preparing the soil, alternatively applying the pushing and the pulling motion.

Due to its properties, the method to use the leaf rake differs from that of the garden rake. Raking with the leaf rake is performed with short paddling motions into different directions, simultaneously pressing the rake quite strongly against the ground, using the flexible properties of the rake. The leaf rake is the opposite of the garden rake. The functions of the leaf rake are flexible. Its prongs are normally long, self-flexing, and form a curved fan structure. The leaf rake, unlike the garden rake, is not intended for pulling a heavy load. The prongs of the leaf rake cannot endure the load: they straighten, letting go of the load. The prongs, when flexing, simply skip the load or obstruction. But the leaf rake is indeed quite effective for removing light debris, for example, dry tree leaves over an uneven terrain, where the rake's tight flexible prong front can best be used to its full advantage. The flexible long prongs of the leaf rake extend into the depressions in the terrain, effectively gathering any possible debris. When raking, the so-called extra efficiency from the leaf rake's flexibility, i.e., the result of the relaxation of the rake's prong tension when pressed against the ground at the end of a fast raking motion, is employed. This extra efficiency literally throws the tips of the rake prongs toward the handle of the rake.

In spite of the honorable traditions, both the garden rake and the leaf rake have their weaknesses. The garden rake is good for sand or long grass, or for an even field or other even area. When the ground becomes uneven, the rigid garden rake becomes hopelessly ineffective. Its prongs do not extend into the depressions and keep getting stuck in the obstructions. When the ground is covered with long dry grass, the rake often gets stuck. It is hard work, for each new stroke, to remove long grass from the rake after the previous stroke.

The leaf rake manages to perform in places where the garden rake does not manage to perform, and vice versa. It is impractical to keep changing to another rake when the terrain changes; but, changing rakes does not always help. If there is heavy debris in an uneven terrain, the garden rake does not reach the debris and the leaf rake is not strong enough to remove the heavy debris with the rake stroke.

A solution to this problem is a rake according to the invention in question, **characterised in that** there is a flexible frame (A), or part thereof (K), between the garden rake's prong part (B;D) and the handle (E). With this, we have created a garden rake equipped with flexible properties, capable of pulling even heavier debris on an even ground. The rake's flexible frame and rigid prongs are of the same, plastic-cast part. Other separate solutions can naturally be considered as long as they are according to the spirit of the invention. In case of an uneven terrain, another application of the invention is better. The flexible frame, with the prong parts, is divided at least into two parts. In such a case, the prong part is in two separate groups, which flex independently. The frame division extends from the prong part to ca. the middle of the frame or past the middle, close to the point where the handle is fitted, depending on the desired range of flexibility of the frame. The division is best achieved by leaving a slit large enough between the parts of the frame. The slit dividing the frame becomes wider toward the prongs and wide enough for the debris not to get stuck in the slit. In the aforementioned manner, the frame can be divided into many parts, but the best outcome is achieved by dividing the frame and prong part into three parts in the aforementioned way. Best flexibility is achieved when the slit extends beyond the middle of the frame. Hence, a perfect combination of the leaf rake and the garden rake is created. When raking with a rake according to the invention in the similar manner than with an ordinary rake, extra efficiency, earlier described in connection with the use of the leaf rake, is generated. This extra efficiency is created by the curved or similar frame, or by a similar part, between the rigid prongs and the handle. Similar extra efficiency is generated by a curved flexible part fastened onto the handle, but the best outcome is achieved with rigid prongs and a curved flexible frame, which are part of the same piece. When raking a heavy load, the rigid prong part does not give in, but the flexible curved part straightens and becomes tense. As the rake stoke is completed, the curved part with the tension quickly returns to its normal form, generating the desired extra efficiency. The rake does not get stuck in the long grass.

The following is a more detailed explanation of invention, with references to the appended drawings, in which
Figure 1 shows the rake from above, and
Figure 2 shows the rake a from below.
Figure 3 shows a front angle illustration of the rake
Figure 4 shows a back angle illustration of the rake.

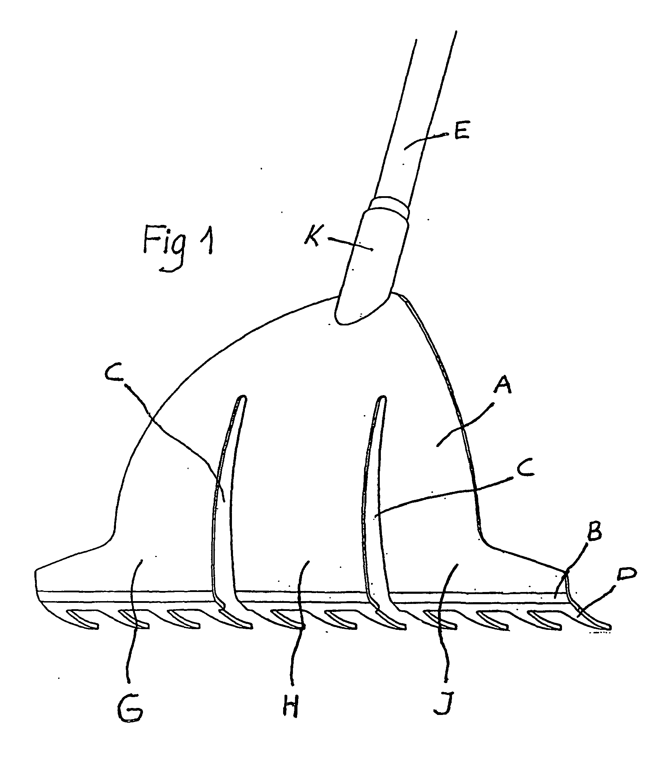

Figure 1 shows the rake's flexible frame (A) and the handle (E) fitted into it. The figure also shows the rigid prong (D), which is typical of a garden rake, and its inflexible part (B) connecting it to the frame (A). It also shows the V-shaped slits (C), which divide the frame (A) into three parts (G;H;I). The handle (E) is fitted into the part (K) between the frame (A) and the handle (E).

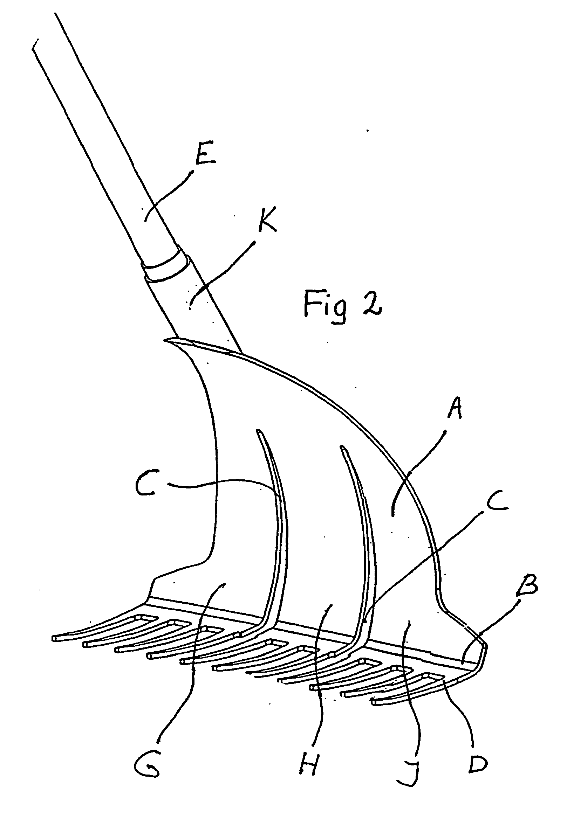

Figure 2 presents the rake from below, showing the slits or divisions (C) of the frame (A) and the handle (E) which is fitted into the extension (K) of the frame (A). The figure also shows the rigid prong (D) and its inflexible part (B) connecting it to the frame (A), which is divided into three parts (G;H;I). The part (K), into which the handle (E) is fitted, is shown between the handle (E) and the frame (A).

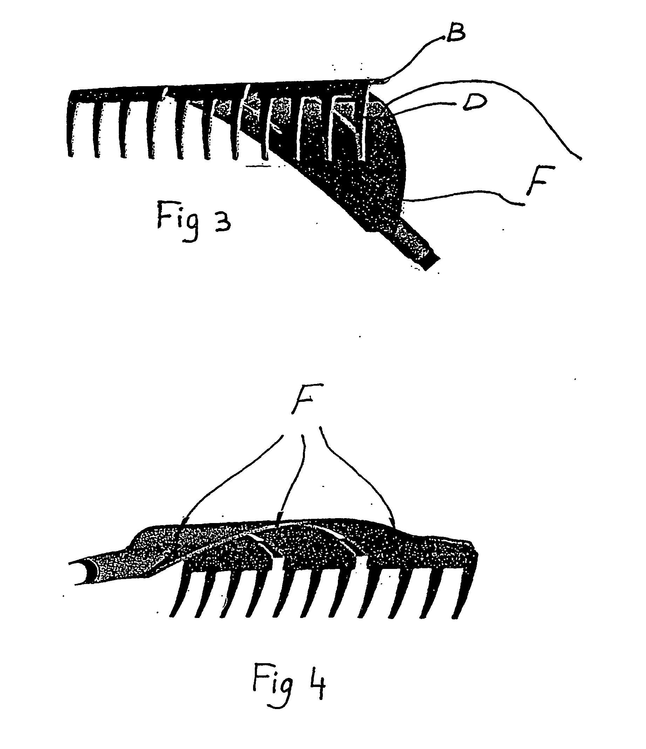

Similar to the above figures, Figure 3 shows the sturdy part (B) connecting the prong and the frame as well as the prong (D). It also illustrates the curved nature of the frame (F).

Figure 4 gives a more detailed illustration of the curved nature (F) of the frame.

The explanation and the related drawings are only intended for illustrating the concept according to the invention. The details of a rake according to the invention can vary considerably within the framework of the appended claims.

## Claims

1. A rake, comprising a handle (E), a frame (A), and a prong part (B;D), usable as garden and leaf rake, **CHARACTERISED IN, that** the frame or part of the frame (K) is flexible, the prongs are rigid and the frame part and prong part are integrally made of the same plastics material.

2. A rake according to claim 1, **CHARACTERISED IN, that** the prong part (B;D) and the first part of the frame (A) are divided at least in two parts (G;H;I).

3. A rake according to claims 1 and 2, **CHARACTERISED IN, that** the prong part (B;D) and the first part of the frame (A) are divided in three parts (G;H;I).

4. A rake according to claims 1 - 3, **CHARACTERISED IN, that** the prong part (B;D) and the frame (A) are divided 5 - 10 cm beyond the frame's (A) middle near the handle (E).

5. A rake according to claims 1 - 2 and 4, **CHARACTERISED IN, that** the prong part (B;D) and frame (A) are divided into more than three parts (G;H;I).

6. A rake according to one of the above claims, **CHARACTERISED IN, that** the frame (A) or part thereof (K) is curved (F).

7. A rake according to claims 3 - 5, **CHARACTERISED IN, that** slits (C) dividing the frame(A) are V- shaped, opening toward the prong part (B;D).

## Patentansprüche

1. Ein Rechen, **dadurch GEKENNZEICHNET, dass** der flexible Rahmen (A) oder ein Teil davon (K) zwischen dem Teil mit den Zinken (B, D) des Gartenrechen und dem Stiel (E) sich befindet.

2. Ein Rechen nach Anspruch 1, **dadurch GEKENNZEICHNET, dass** der Teil mit den Zinken (B, D) und der erste Teil des Rahmens (A) mindestens in zwei Teile (G, H, I) geteilt ist.

3. Ein Rechen nach Ansprüche 1 und 2, **dadurch GEKENNZEICHNET, dass** der Teil mit den Zinken (B, D) und der erste Teil des Rahmens (A) in drei Teile (G, H, I) geteilt sind.

4. Ein Rechen nach Ansprüche 1 - 3, **GEKENNZEICHNET dadurch, dass** der Teil mit den Zinken (B, D) und der Rahmen (A) 5 - 1 0 cm über der Mitte des Rahmens (A), in der Nähe des Stiels (E), geteilt sind.

5. Ein Rechen nach Ansprüche 1 - 2 und 4, **dadurch GEKENNZEICHNET, dass** der Teil mit den Zinken (B, D) und der Rahmen (A) in mehr als drei Teile (G, H, I) geteilt sind.

6. Ein Rechen, einem der vorstehenden Ansprüche entsprechend, **dadurch GEKENNZEICHNET, dass** der Rahmen (A) oder ein Teil davon (K) gebogen sind.

7. Ein Rechen, einem der vorstehenden Ansprüche entsprechend , **dadurch GEKENNZEICHNET, dass** die Schlitze (C), die den Rahmen (A) teilen, V-formig sind und in Richtung auf den Teil mit den Zinken (B, D) öffnen.

## Revendications

1. Un râteau selon la revendication 1, **caractérisé en ce qu'**il y a un cadre (A) ou partie du cadre (K) flexible entre la partie avec les dents du râteau de jardin (B, D) et le manche (E).

2. Un râteau selon la revendication 1, **caractérisé en ce que** la partie avec les dents (B, D) et la première partie du cadre (A) sont divisées en au moins deux parties (G, H, 1).

3. Un râteau selon les revendications 1 et 2, **caractérisé en ce que** la partie avec les dents (B, D) et la première partie du cadre (A) sont divisées en trois parties (G, H, I).

4. Un râteau selon les revendications 1 - 3, **caractérisé en ce que** la partie avec les dents (B, D) et le cadre (A) sont divisés 5 - 1 0 cm au-delà du milieu du cadre (A) près du manche (E).

5. Un râteau selon les revendications 1 - 2 et 4, **caractérisé en ce que** la partie avec les dents (B, D) et le cadre (A) sont divisés en plus de trois parties (G, H, I).

6. Un râteau selon l'une quelconque des revendications précédentes, **caractérisé en ce que** le cadre (A) ou une partie de celui-ci (K) est incurvée.

7. Un râteau selon l'une quelconque des revendications précédentes, **caractérisé en ce que** les fentes (C) que divisent le cadre (A) revêtent la forme de la lettre V et ouvrent vers la partie avec les dents (B, D).
